(19) Europäisches Patentamt / European Patent Office / Office européen des brevets

(11) **EP 2 303 985 B1**

(12) **FASCICULE DE BREVET EUROPEEN**

(45) Date de publication et mention de la délivrance du brevet:
**21.12.2016 Bulletin 2016/51**

(51) Int Cl.:
***C09K 11/77*** *(2006.01)*     ***C01B 25/12*** *(2006.01)*

(21) Numéro de dépôt: **09745758.4**

(86) Numéro de dépôt international:
**PCT/EP2009/055767**

(22) Date de dépôt: **13.05.2009**

(87) Numéro de publication internationale:
**WO 2009/138426 (19.11.2009 Gazette 2009/47)**

(54) **PHOSPHATE DE LANTHANE ET D'AU MOINS UNE TERRE RARE CHOISIE PARMI LE CERIUM ET LE TERBIUM SOUS FORME D'UNE SUSPENSION, PROCEDE DE PREPARATION ET UTILISATION COMME LUMINOPHORE**

PHOSPHAT DES LANTHANS UND DES ZERS UND/ODER TERBIUMS IN FORM EINER SUSPENSION, HERSTELLUNGSVERFAHREN DAFÜR UND SEINE VERWENDUNG ALS LEUCHTSTOFF

PHOSPHATE OF LANTHANUM AND AT LEAST ONE RARE EARTH ELEMENT SELECTED FROM CERIUM AND TERBIUM IN THE FORM OF A SUSPENSION, METHOD FOR PREPARING SAME, AND USE THEREOF AS A PHOSPHOR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **15.05.2008 FR 0802628**

(43) Date de publication de la demande:
**06.04.2011 Bulletin 2011/14**

(73) Titulaire: **Rhodia Opérations**
**93306 Aubervilliers (FR)**

(72) Inventeurs:
• **BUISSETTE, Valérie**
**F-75015 Paris (FR)**
• **LE-MERCIER, Thierry**
**F-93110 Rosny-sous-Bois (FR)**
• **THIERS, Laurent**
**F-91600 Savigny-sur-Orge (FR)**

(74) Mandataire: **Senninger, Thierry et al**
**Rhodia Operations**
**Département Brevets**
**Bureau 0.121**
**40, rue de la Haie Coq**
**93306 Aubervilliers Cedex (FR)**

(56) Documents cités:
**FR-A- 2 859 922      US-A1- 2004 044 088**
**US-B1- 6 979 415**

• **LING LI, ET. AL.: "Improved Luminescence of Lanthanide(III)-Doped Nanophosphors by Linear Aggregation" JOURNAL OF PHYSICAL CHEMISTRY C, vol. 111, 2007, pages 4111-4115, XP002508181 ACS**
• **LIN MA, ET. AL.: "Hydrothermal growth and morphology evolution of CePO4 aggregates by a complexing method" MATERIALS RESEARCH BULLETIN, vol. 43, 9 janvier 2008 (2008-01-09), pages 2840-2849, XP002508182 Elsevier**
• **L. KARPOVICH, ET. AL.: "Synthesis and characterization of mixed-morphology CePO4 nanoparticles" JOURNAL OF SOLID STATE CHEMISTRY, vol. 180, 2007, pages 840-846, XP002508183 Elsevier**

Remarques:
Le dossier contient des informations techniques présentées postérieurement au dépôt de la demande et ne figurant pas dans le présent fascicule.

EP 2 303 985 B1

**Description**

La présente invention concerne un phosphate d'au moins une terre rare choisie parmi le cérium et le terbium, éventuellement en combinaison avec le lanthane, sous forme d'une suspension, son procédé de préparation et son utilisation comme luminophore.

Les domaines de la luminescence et de l'électronique connaissent actuellement des développements importants. On peut citer comme exemple de ces développements, la mise au point des systèmes à plasma (écrans et lampes) pour les nouvelles techniques de visualisation et d'éclairage ou de marquage. Ces nouvelles applications nécessitent des matériaux luminophores présentant des propriétés encore améliorées. Ainsi, outre leur propriété de luminescence, on demande à ces matériaux des caractéristiques spécifiques de morphologie ou de granulométrie afin de faciliter notamment leur mise enoeuvte dans les applications recherchées.

Plus précisément, il est demandé d'avoir des luminophores se présentant sous la forme de particules le plus possible individualisées et de taille très fine, submicronique, notamment inférieure à 500 nm. On connaît des procédés de préparation de luminophores par chamottage. Toutefois, ces procédés nécessitent pour obtenir les phases cristallographiques recherchées une calcination à une température élevée ce qui a pour conséquence généralement de conduire à des produits difficiles à broyer de sorte qu'il est impossible d'atteindre une telle taille.

LING LI, et al.: "Improved luminescence of Lanthanide(III)-Doped Nanophosphors by Linear Aggregation", JOURNAL OF PHYSICAL CHEMISTRY C, vol. 111, 2007, pages 4111-4115 décrit une suspension dans une phase liquide des particules monocrystallines isotropes de phosphates de terre rare $LnPO_4$ (Ln=La,Ce,Tb) du type hexagonal rhapdophane avec une taille moyenne de 24+/-6nm.Ces phosphates de terre rare sont agglomérés en particules secondaires avec une taille moyenne d'au plus 400 nm.

Par ailleurs et toujours dans le cadre du développement dans les domaines de la luminescence et de l'électronique, on cherche à obtenir des matériaux, sous forme de films, transparents et luminescents.

L'objet principal de l'invention est de procurer des produits ayant de telles caractéristiques granulométriques.

Un second objet de l'invention est d'obtenir un matériau luminescent du type ci-dessus.

Dans ce but, le phosphate de l'invention est un phosphate de terre rare (Ln), Ln représentant au moins une terre rare choisie parmi le cérium, le terbium ou le lanthane en combinaison avec au moins l'une des deux premières terres rares précitées, caractérisé en ce qu'il se présente sous forme d'une suspension dans une phase liquide de particules primaires de taille moyenne d'au moins 25 nm, isotropes, monocristallines, du type monazite, agglomérées en particules secondaires, de taille moyenne d'au plus 400 nm.

D'autres caractéristiques, détails et avantages de l'invention apparaîtront encore plus complètement à la lecture de la description qui va suivre, ainsi que du dessin annexé dans lesquels :

- la figure 1 est une photo MET d'un phosphate selon l'invention;
- la figure 2 est un spectre d'émission de ce phosphate.

Par terre rare on entend dans la suite de la description les éléments du groupe constitué par le scandium, l'yttrium et les éléments de la classification périodique de numéro atomique compris inclusivement entre 57 et 71.

On précise aussi pour la suite de la description que, sauf indication contraire, dans les fourchettes de valeurs qui sont données, les valeurs aux bornes sont incluses.

Le phosphate de l'invention est un phosphate de cérium ou de terbium ou encore d'une combinaison de ces deux terres rares. Ce peut être aussi un phosphate de lanthane en combinaison avec au moins une de ces deux terres rares précitées et ce peut être aussi tout particulièrement un phosphate de lanthane, de cérium et de terbium.

Selon des modes de réalisation particuliers, les proportions de ces différentes terres rares peuvent varier dans des valeurs qui vont être données ci-dessous. Ainsi, les particules de la suspension de l'invention (particules primaires ou secondaires) comprennent essentiellement un phosphate qui peut répondre à la formule générale (1) suivante :

$$La_xCe_yTb_zPO_4 \qquad (1)$$

dans laquelle la somme x+y+z est égale à 1 et au moins un de y et de z est différent de 0.

Il peut y avoir présence dans les particules d'une certaine quantité de phosphate résiduel.

Si au moins un de x et de y est différent de 0 dans la formule (1), de préférence z est d'au plus 0,5, et z peut être compris entre 0,05 et 0,2 et plus particulièrement entre 0,1 et 0,2.

x peut être compris plus particulièrement entre 0,4 et 0,95.

On peut mentionner, à titre d'exemples seulement, les compositions plus particulières suivantes :

$La_{0,44}Ce_{0,43}Tb_{0,13}PO_4$
$La_{0,57}Ce_{0,29}Tb_{0,14}PO_4$

$La_{0,56}Ce_{0,30}Tb_{0,14}PO_4$
$La_{0,94}Ce_{0,06}PO_4$
$Ce_{0,67}Tb_{0,33}PO_4$

Selon un mode de réalisation particulier, le phosphate de formule (1) présent dans la particule peut comprendre d'autres éléments jouant classiquement un rôle notamment de promoteur des propriétés de luminescence ou de stabilisateur des degrés d'oxydation des éléments cérium et terbium. A titre d'exemple de ces éléments, on peut citer plus particulièrement les alcalins (Li, Na, K, en particulier), le bore et d'autres terres rares comme le scandium, l'yttrium, le lutécium et le gadolinium. Lorsque le lanthane est présent, les terres rares précitées peuvent être plus particulièrement présentes en substitution de cet élément. Ces éléments promoteurs ou stabilisateurs sont présents en une quantité généralement d'au plus 1% en masse d'élément par rapport à la masse totale du phosphate de formule (1) dans le cas des alcalins et du bore et généralement d'au plus 30% pour les autres éléments mentionnés ci-dessus.

Par ailleurs, le phosphate selon l'invention présente des concentrations en cérium IV et/ou en terbium IV très faibles, même après calcination à une température élevée sous air.

Cette faible proportion en ces deux espèces peut être démontrée par un test de colorimétrie consistant à déterminer les coordonnées caractéristiques de la couleur du corps dans le système CIE 1976 (L*, a*, b*) tel que défini par la Commission Internationale d'Eclairage, et répertorié dans le Recueil de Normes Françaises (AFNOR) couleur colorimétrique n° X08-012 (1983). Ces coordonnées sont déterminées au moyen d'un colorimètre commercialisé par la Société Pacific Scientific.

Ainsi, le phosphate de l'invention, sous forme poudre après séparation de la phase liquide de la suspension, présente après calcination à 700°C sous air, une clarté, représentée par la coordonnée L*, supérieure à 98% et avantageusement d'au moins 99%.

Cette coordonnée L* permet de mesurer la couleur blanche du produit qui est elle-même directement reliée à la présence d'espèces colorées dans le produit telles que du cérium et/ou du terbium à l'état d'oxydation 4+.

Le phosphate de l'invention est sous forme d'une suspension de particules dites « particules secondaires ». Ces particules sont des agglomérats d'autres particules plus fines, agglomérées, appelées dans la présente description « particules primaires ».

Ces particules secondaires présentent une taille moyenne ($d_{50}$) qui est d'au plus 400 nm, plus particulièrement d'au plus 300 nm et encore plus particulièrement d'au plus 200 nm. Généralement, leur taille moyenne est d'au moins 50 nm, plus particulièrement d'au moins 100 nm.

Par ailleurs, ces particules peuvent présenter une dispersion granulométrique resserrée; plus précisément leur indice de dispersion peut être d'au plus 1, de préférence d'au plus 0,7 et encore plus préférentiellement d'au plus 0,5.

Pour l'ensemble de la description, la taille moyenne et l'indice de dispersion données pour les particules secondaires sont les valeurs obtenues en mettant en oeuvre la technique de diffraction laser en utilisant un granulomètre laser (répartition en volume).

On entend par indice de dispersion le rapport :

$$\sigma/m = (d_{84}-d_{16})/2d_{50}$$

dans lequel :

- $d_{84}$ est le diamètre des particules pour lequel 84% des particules ont un diamètre inférieur à $d_{84}$;
- $d_{16}$ est le diamètre des particules pour lequel 16% des particules ont un diamètre inférieur à $d_{16}$;
- $d_{50}$ est le diamètre moyen des particules.

Il est précisé ici que les mesures de taille moyenne sont faites sur des suspensions qui n'ont pas subi de décantation, c'est-à-dire sans phase surnageante et sans culot de décantation, et qui, si nécessaire, ont été traitées par un passage à la sonde à ultra-sons selon les méthodes bien connues mise enoeuvre pour ce type de mesures.

Les particules primaires qui constituent les particules secondaires présentent des caractéristiques de morphologie, de phase et de taille qui vont maintenant être décrites plus précisément.

Les particules primaires sont substantiellement sous forme d'un orthophosphate de terre rare de structure cristalline monazite. L'analyse par diffraction des rayons X (DRX) du phosphate de l'invention ne fait pas apparaître la présence de phases parasites de type par exemple $CeO_2$ ou encore $Tb_4O_7$ ce qui confirme par ailleurs la présence du cérium et/ou du terbium uniquement à l'état d'oxydation 3+.

Les particules primaires sont monocristallines.

L'aspect monocristallin des particules peut être mis en évidence en comparant la taille moyenne des particules mesurée par la technique MET (Microscopie Electronique par Transmission) avec la valeur du domaine cohérent obtenue à partir de l'analyse par DRX. Il est précisé ici que la valeur mesurée en DRX correspond à la taille du domaine cohérent calculé à partir de la largeur de la raie de diffraction correspondant au plan cristallographique (200). On utilise pour cette mesure le modèle de Scherrer, tel que décrit dans l'ouvrage Théorie et technique de la radiocristallographie, A.Guinier, Dunod, Paris, 1956. Les deux valeurs : taille moyenne déterminée par MET ($t_1$) et taille moyenne déterminée par DRX ($t_2$) présentent, pour les particules primaires, le même ordre de grandeur, c'est-à-dire, au sens de la présente description, qu'elles sont dans un rapport $t_1/t_2$ d'au plus 2, plus particulièrement d'au plus 1,5.

Ces particules sont en outre isotropes ou substantiellement isotropes en ce qui concerne leur morphologie. Leur forme se rapproche en effet de celle d'une sphère (morphologie totalement isotrope) par opposition aux particules de forme aciculaire ou plaquettaire.

Plus précisément, les particules peuvent présenter un rapport L/l d'au plus 2, plus particulièrement d'au plus 1,5, L désignant la plus grande longueur de la particule et l désignant la plus petite. Les valeurs de L et l sont déterminées par analyse par MET.

Comme indiqué plus haut, les particules primaires ont une taille moyenne d'au moins 25 nm, plus particulièrement d'au moins 30 nm. Cette taille peut être comprise entre 25 nm et 200 nm et plus particulièrement entre 30 nm et 150 nm.

Pour les particules primaires les valeurs de taille données ici et pour l'ensemble de la description sont des valeurs obtenues par la technique d'analyse MET ou encore par DRX.

Le phosphate de l'invention se présente généralement sous la forme d'une suspension dans une phase liquide des particules qui viennent d'être décrites. Cette suspension peut sédimenter au cours du temps et cette sédimentation peut entraîner une agglomération des particules entre elles. Toutefois, et cela est une propriété importante de la suspension de l'invention, une simple agitation mettant en oeuvre une énergie mécanique très faible, notamment un traitement aux ultrasons, par exemple avec une puissance de 120 W pendant 3 minutes, permet de désagglomérer ces particules et donc de revenir à une suspension dont les particules présentent toutes les caractéristiques qui ont été données plus haut.

La phase liquide des suspensions selon l'invention peut être de l'eau ou un mélange eau/solvant miscible à l'eau ou encore un solvant organique.

Le solvant organique peut être tout particulièrement un solvant miscible à l'eau. On peut citer, par exemple, les alcools comme le méthanol ou l'éthanol, les glycols comme l'éthylène glycol, les dérivés acétates des glycols comme le monoacétate d'éthylène glycol, les éthers de glycols, les polyols ou les cétones.

Cette phase liquide peut aussi comporter un dispersant.

Ce dispersant peut être choisi parmi les dispersants connus, par exemple parmi les polyphosphates ($M_{n+2}P_nO_{3n+1}$) ou les métaphosphates ($[MPO_3]_n$) alcalins (M désignant un alcalin comme le sodium), notamment comme l'héxamétaphosphate de sodium. Il peut être choisi aussi parmi les silicates alcalins (silicate de sodium), les amino-alcools, les phosphonates, l'acide citrique et ses sels, les dérivés de l'acide phosphosuccinique ($(HOOC)_n$-R-$PO_3H_2$ où R est une chaine alkyle), les acides polyacrylique, polyméthacrylique, polystyrène sulfonique et leurs sels. On préfère tout particulièrement l'acide citrique et les métaphosphates.

La quantité de dispersant peut être comprise entre 1% et 15%, plus particulièrement entre 4% et 8%, cette quantité étant exprimée en masse de dispersant par rapport à la masse de solide dans la dispersion.

La concentration de la suspension en phosphate peut varier dans une large gamme. A titre d'exemple, elle peut être comprise entre environ 10 g/l et environ 500 g/l, plus particulièrement entre 40 g/l et 300 g/l.

Pour les suspensions en phase aqueuse, et selon une variante particulière, une caractéristique intéressante de celles-ci est leur stabilité dans un domaine de pH important. Ainsi, ces suspensions restent stables, c'est-à-dire ici qu'elles ne donnent pas lieu à une sédimentation et une agglomération des particules lorsque leur pH est amené à varier entre dans des plages de valeurs données, l'ensemble de ces plages couvrant globalement des valeurs de pH qui peuvent être comprises entre 2 et 11, plus particulièrement entre 4 et 10. De telles variations de pH peuvent se produire dans la mise enoeuvre des suspensions dans des applications en luminescence et cette caractéristique est de ce fait importante car les suspensions peuvent ainsi être utilisées dans une large gamme d'applications.

L'invention concerne aussi un phosphate qui se présente sous forme solide, c'est-à-dire d'une poudre qui a pour caractéristique de pouvoir conduire au phosphate sous forme de suspension décrit plus haut. En d'autres termes, lorsque cette poudre est redispersée dans une phase liquide, après une simple agitation, sans qu'il soit nécessaire d'appliquer une énergie mécanique importante, notamment, là encore, par simple traitement aux ultrasons, par exemple avec une puissance de 450 W environ, on obtient une suspension du phosphate présentant les caractéristiques données plus haut. Bien entendu, tout ce qui a été décrit précédemment concernant la nature et la composition du phosphate : nature de la phase cristallographique, nature et quantité de la terre rare, s'applique à l'identique pour le phosphate sous forme solide.

Le procédé de préparation du phosphate de l'invention sous forme de suspension va maintenant être décrit.

Ce procédé est caractérisé en ce qu'il comprend les étapes suivantes :

- on introduit, en continu, une première solution contenant des sels solubles des terres rares (La, Ce, Tb) dans une seconde solution contenant des ions phosphates et présentant un pH initial inférieur à 2;
- on contrôle au cours de l'introduction de la première solution dans la seconde, le pH du milieu ainsi obtenu à une valeur constante et inférieure à 2, ce par quoi on obtient un précipité;
- on récupère le précipité ainsi obtenu et on le calcine à une température d'au moins 600°C;
- on effectue un broyage humide du produit issu de la calcination.

La première étape de ce procédé consiste à introduire, en continu et sous agitation, une première solution de sels des terres rares rentrant dans la composition du phosphate que l'on cherche à préparer, dans une seconde solution contenant des ions phosphates et présentant un pH initial inférieur à 2; on contrôle en outre le pH du milieu ainsi formé lors de la mise en contact de ces deux solutions à une valeur constante et inférieure à 2. Les sels de terres rares convenables sont notamment les sels solubles en milieu aqueux, comme par exemple les nitrates, chlorures, acétates, carboxylates, ou un mélange de ceux-ci.

Les ions phosphates destinés à réagir avec la solution des sels de terres rares peuvent être apportés par des composés purs ou en solution, comme par exemple l'acide phosphorique, les phosphates d'alcalins ou d'autres éléments métalliques donnant avec les anions associés aux terres rares un composé soluble. Les ions phosphates sont ajoutés de préférence sous forme d'une solution d'un phosphate d'ammonium qui peut être plus particulièrement le phosphate diammonique ou monoammonique.

De préférence, la solution contenant les ions phosphates présente initialement (c'est à dire avant le début de l'introduction de la solution de sels de terres rares) un pH inférieur à 2 et de préférence compris entre 1 et 2. Aussi, si la solution utilisée ne présente pas naturellement un tel pH, ce dernier est amené à la valeur convenable désirée soit par ajout d'une base (par exemple de l'ammoniaque, dans le cas d'une solution initiale d'acide phosphorique) soit par ajout d'un acide (par exemple de l'acide nitrique, dans le cas d'une solution initiale de phosphate diammonique).

Les ions phosphates sont présents en quantité telle que l'on ait dans le milieu de réaction un rapport molaire $PO_4^{3-}$/terre rare supérieur à 1, et avantageusement compris entre 1,1 et 3.

Par « contrôle du pH », on entend un maintien du pH du milieu à une certaine valeur, constante ou sensiblement constante, par addition de composés basiques ou de solutions tampons, dans le milieu. Le pH du milieu variera ainsi d'au plus 0,5 unité de pH autour de la valeur de consigne fixée, et de préférence encore d'au plus 0,1 unité de pH autour de cette valeur.

Par la suite, au cours de l'introduction de la solution contenant les sels de terres rares, le pH du milieu obtenu diminue progressivement; aussi, pour maintenir le pH de ce milieu à la valeur constante de travail désirée, laquelle doit être inférieure à 2 et de préférence comprise entre 1 et 2, on introduit simultanément dans ce milieu un composé basique.

Comme composé basique convenable, on peut citer, à titre d'exemples, les hydroxydes métalliques (NaOH, LiOH, KOH, $Ca(OH)_2$,....) ou l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu, et permettant un contrôle du pH du milieu de précipitation. Un composé basique préféré de l'invention est l'ammoniac, mis enoeuvre avantageusement sous forme de solution aqueuse.

Le mélange de la solution du sel de terre rare et des ions phosphates produit un précipité.

Cette précipitation est réalisée de préférence en milieu aqueux à une température qui n'est pas critique et qui est comprise, avantageusement, entre la température ambiante (15°C - 25°C) et 100°C. Cette précipitation a lieu sous agitation du milieu de réaction.

A l'issue de la précipitation il est possible éventuellement d'effectuer un mûrissement en maintenant le milieu réactionnel obtenu précédemment à une température située dans la même gamme de température que celle à laquelle la précipitation a eu lieu et pendant une durée qui peut être comprise entre un quart d'heure et une heure par exemple.

Le précipité obtenu peut être séparé du milieu réactionnel par tout moyen convenable, notamment par filtration. Il peut être lavé par exemple avec de l'eau pour éliminer d'éventuelles impuretés.

L'étape suivante du procédé consiste à calciner le précipité obtenu.

Cette calcination se fait à une température qui est d'au moins 600°C et qui peut être plus particulièrement comprise entre 600°C et 1000°C. Cette calcination se fait sous air ou sous atmosphère réductrice par exemple sous hydrogène en mélange dans l'azote ou l'argon. La durée de cette calcination est par exemple de 2 heures environ.

Cette calcination peut se faire avec ou sans flux. A titre de flux convenables, on peut notamment citer le fluorure de lithium, d'aluminium, de magnésium, le chlorure de lithium, d'aluminium, de magnésium, le chlorure de potassium, le chlorure d'ammonium, l'oxyde de bore, cette liste n'étant bien entendu nullement limitative. Le flux est mélangé au produit puis le mélange est porté à la température choisie.

La dernière étape du procédé consiste à broyer le produit issu de la calcination.

On effectue un broyage humide dans l'eau ou encore dans un mélange eau/solvant ou dans un solvant organique du même type que les solvants qui ont été décrits plus haut pour la phase liquide constitutive de la suspension.

On peut utiliser pendant le broyage un dispersant du type de ceux décrits plus haut et dans les quantités données précédemment. Ce dispersant peut contribuer à la stabilité de la suspension obtenue dans différents domaines de pH comme décrit plus haut, un dispersant donné entrainant une stabilité dans une plage donnée de pH.

A l'issue du broyage humide on obtient le phosphate de l'invention sous forme d'une suspension.

On notera que dans le cas d'une suspension dans un mélange eau/solvant ou dans un solvant organique, cette suspension peut être préparée à partir d'une suspension aqueuse telle qu'obtenue par le procédé qui vient d'être décrit et par addition du solvant organique à cette suspension aqueuse puis, si nécessaire, distillation pour éliminer l'eau.

La description qui vient d'être faite concerne la préparation du phosphate sous forme d'une suspension. Pour obtenir le phosphate de l'invention sous forme d'une poudre, on part de cette suspension et on sépare le produit solide de la phase liquide en utilisant toute technique de séparation connue par exemple par filtration. Le produit solide ainsi obtenu peut être séché éventuellement puis remis en suspension dans une phase liquide du même type que celle décrite plus haut.

De par leurs propriétés les phosphates de l'invention, on entend par là les phosphates sous forme d'une suspension ou les phosphates sous forme solide, peuvent être utilisés comme luminophores. Ces phosphates présentent des propriétés de luminescence sous une excitation électromagnétique dans le domaine des longueurs d'onde utilisées dans les systèmes à plasma (écrans et lampes où l'excitation est créée par un gaz rare ou un mélange de gaz rare comme le xénon ou/et le néon) et dans les lampes à vapeur de mercure dans le cas des phosphates dopés par le cérium et le terbium en combinaison. De ce fait, ils peuvent être utilisés comme luminophores dans les systèmes à plasma (écran de visualisation ou système d'éclairage) ou dans les lampes à vapeur de mercure.

L'invention concerne donc aussi les dispositifs luminescents comprenant le phosphate décrit plus haut ou tel qu'obtenu par le procédé décrit ci-dessus ou les dispositifs fabriqués en utilisant ce même phosphate. De même, l'invention concerne les systèmes à plasma ou les lampes à vapeur de mercure, dans la fabrication desquels le phosphate peut rentrer, ou comprenant ce même phosphate. La mise enoeuvre des luminophores dans ces fabrications se fait selon des techniques bien connues par exemple par sérigraphie, électrophorèse, sédimentation, jet d'encre, pulvérisation, « spin-coating » ou « dip-coating ».

Les propriétés granulométriques des phosphates de l'invention font qu'ils peuvent être utilisés comme marqueurs dans des encres semi-transparentes en utilisant les mécanismes d'up-conversion dans l'IR-Visible ou de luminescence dans l'IR, par exemple pour la réalisation d'un marquage par un système de code à barres invisible.

Les phosphates de l'invention peuvent aussi être utilisés comme marqueurs dans un matériau du type papier, carton, textile, verre ou encore un matériau macromoléculaire. Celui-ci peut être de différentes natures : élastomérique, thermoplastique, thermodurcissable.

Les phosphates de l'invention notamment à base de cérium et de terbium peuvent être utilisés comme barrière réfléchissante dans les systèmes d'éclairage à vapeur de mercure.

L'invention concerne aussi un matériau luminescent qui comprend, ou qui peut être fabriqué en utilisant au moins un phosphate selon l'invention ou un phosphate obtenu par le procédé tel que décrit plus haut.

Selon un mode de réalisation préférentiel, ce matériau luminescent peut être en outre transparent. Dans ce cas, le phosphate rentrant dans sa composition ou dans sa fabrication est un phosphate selon l'invention et de taille moyenne des particules secondaires comprise entre 100 nm et 200 nm, de préférence entre 100 nm et 150 nm.

On notera que ce matériau peut comprendre, ou être fabriqué en utilisant, outre le phosphate de l'invention, d'autres phosphates, ou plus généralement, d'autres luminophores, sous forme de particules submicroniques ou nanométriques.

Ce matériau peut se présenter sous deux formes, c'est à dire soit sous une forme massique, l'ensemble du matériau présentant les propriétés de transparence et de luminescence soit sous une forme composite, c'est à dire dans ce cas sous la forme d'un substrat et d'une couche sur ce substrat, la couche présentant seule alors ces propriétés de transparence et de luminescence. Dans ce cas, le phosphate de l'invention est contenu dans ladite couche.

Le substrat du matériau est un substrat qui peut être en silicium, à base d'un silicone ou en quartz. Ce peut être aussi un verre ou encore un polymère comme le polycarbonate. Le substrat, par exemple le polymère, peut se présenter sous une forme rigide et d'une feuille ou d'une plaque de quelques millimètres d'épaisseur. Il peut aussi se présenter sous forme d'un film de quelques dizaines de microns voire quelques microns à quelques dixièmes de millimètre d'épaisseur.

Par matériau transparent on entend au sens de l'invention un matériau qui présente un trouble (haze) d'au plus 60% et une transmission totale d'au moins 60% et, de préférence, un trouble (haze) d'au plus 40% et une transmission totale d'au moins 80%. La transmission totale correspond à quantité de lumière totale qui traverse la couche, par rapport à la quantité de lumière incidente. Le trouble (haze) correspond au rapport de la transmission diffuse de la couche à sa transmission totale.

Ces deux grandeurs sont mesurées dans les conditions suivantes : la couche de matériau d'épaisseur comprise entre 0,2 $\mu$m et 1 $\mu$m est déposée sur un substrat de verre standard, d'épaisseur 0,5 mm. La fraction massique en particules de phosphate dans le matériau est d'au moins 20%. Les mesures de la transmission totale et de la transmission diffuse s'effectuent à travers la couche du matériau et du substrat, au moyen d'une procédure classique sur un spectromètre Perkin Elmer Lamda 900, équipé d'une sphère d'intégration, pour une longueur d'onde de 550 nm.

Le matériau, et plus particulièrement la couche précitée, peut comprendre, outre un phosphate selon l'invention, des liants ou des charges du type polymère (polycarbonate, méthacrylate), silicate, bille de silice, phosphate, oxyde de titane ou autres charges minérales pour améliorer notamment les propriétés mécaniques et optiques du matériau.

La fraction massique en particules de phosphate dans le matériau peut être comprise entre 20% et 99%.

L'épaisseur de la couche peut être comprise entre 30 nm et 10 $\mu$m, de préférence entre 100 nm et 3 $\mu$m et encore plus préférentiellement entre 100 nm et 1 $\mu$m.

Le matériau, sous sa forme composite, peut être obtenu par dépôt sur le substrat, éventuellement préalablement lavé par exemple par un mélange sulfo-chromique, d'une suspension de phosphate de l'invention. On peut aussi ajouter au moment de ce dépôt, les liants ou charges mentionnés plus haut. Ce dépôt peut être réalisé par une technique de pulvérisation, de « spin-coating » ou de « dip-coating ». Après dépôt de la couche, le substrat est séché à l'air et il peut éventuellement ensuite subir un traitement thermique. Le traitement thermique est réalisé par un chauffage à une température qui généralement est d'au moins 200°C et dont la valeur supérieure est fixée notamment en tenant compte de la compatibilité de la couche avec le substrat de manière à éviter notamment des réactions parasites. Le séchage et le traitement thermique peuvent être conduits sous air, sous atmosphère inerte, sous vide ou encore sous hydrogène.

On a vu plus haut que le matériau peut comprendre des liants ou des charges. Il est possible dans ce cas d'utiliser des suspensions qui comprennent elles-mêmes au moins un de ces liants ou de ces charges ou encore des précurseurs de ceux-ci.

Le matériau selon la forme massique peut être obtenu par incorporation des particules de phosphate dans une matrice de type polymère par exemple, comme du polycarbonate, du polyméthacrylate ou un silicone.

L'invention concerne enfin un système luminescent qui comprend un matériau du type décrit ci - dessus et, en outre, une source d'excitation qui peut être une source de photons UV, comme une diode UV ou encore une excitation de type Hg, gaz rares ou rayons X.

Le système peut être utilisé comme dispositif d'éclairage mural transparent, du type vitrage éclairant.

Des exemples vont maintenant être donnés. Dans ces exemples la granulométrie a été déterminée selon la technique de diffraction laser précitée. On précise en plus que la mesure a été effectuée avec un appareil de type Coulter sur des suspensions diluées à une concentration comprise entre 1 g/l et 10 g/l et qui ont préalablement subi un passage à la sonde à ultra-sons (sonde 450 W) pendant 2 minutes 30 secondes.

EXEMPLE 1

Cet exemple concerne la préparation d'une suspension d'un phosphate de lanthane, de cérium et de terbium de formule $La_{0,56}Ce_{0,3}Tb_{0,14}PO_4$, selon l'invention.

Une solution est constituée par un mélange de nitrates de lanthane, de cérium et de terbium, de composition suivante (en% atomique) :

La : 56%
Ce : 30%
Tb: 14%

La concentration de la solution de nitrates est de 350 g/l.

Cette solution est ajoutée à une solution d'acide phosphorique à 60°C, dont le pH est contrôlé par une addition d'ammoniaque à 1,6. Le rapport molaire phosphate/terres rares est de 1,15. Le pH au cours de la précipitation est régulé pour rester constant, par addition d'ammoniaque.

A l'issue de la précipitation, le milieu réactionnel est maintenu 15 minutes à 60°C. Le précipité est ensuite récupéré par filtration, lavé à l'eau puis séché sous air, et calciné à 850°C.

La poudre ainsi obtenue présente une structure phosphate de LaCeTb, de type monazite. On lui fait subir un broyage humide dans un broyeur bol à billes Molinex, avec des billes de 0,4-0,6 mm en $ZrO_2$-$SiO_2$. Le taux d'occupation des billes dans la chambre de broyage est de 65%. La concentration de la suspension est de 50% massique en solide, et un dispersant, l'hexamétaphosphate de sodium (HMP), est ajouté à un taux de 0,1 g HMP/g poudre (soit 10% massique). La vitesse de rotation du mobile est de 1000 tpm. Le broyage dure 150 minutes.

Suite à ce broyage humide, un second broyage est effectué sur la suspension avec des billes de 0,2-0,3 mm en $ZrO_2$-$SiO_2$. Les autres paramètres du broyage ne changent pas, et le temps de broyage est de 60 minutes.

L'analyse par granulométrie laser, sans ultrasons, donne les résultats suivants :

| | |
|---|---|
| $d_{16}$ (nm) | 90 |
| $d_{50}$ (nm) | 126 |

(suite)

| | |
|---|---|
| $d_{84}$ (nm) | 180 |
| $\sigma/m$ | 0,4 |

L'analyse de l'échantillon ainsi obtenu par diffraction des rayons X révèle une phase monazite de phosphate de lanthane, de cérium et de terbium, avec une taille de domaine cohérent calculé à partir de la largeur de la raie de diffraction correspondant au plan cristallographique (200) de 35 nm.

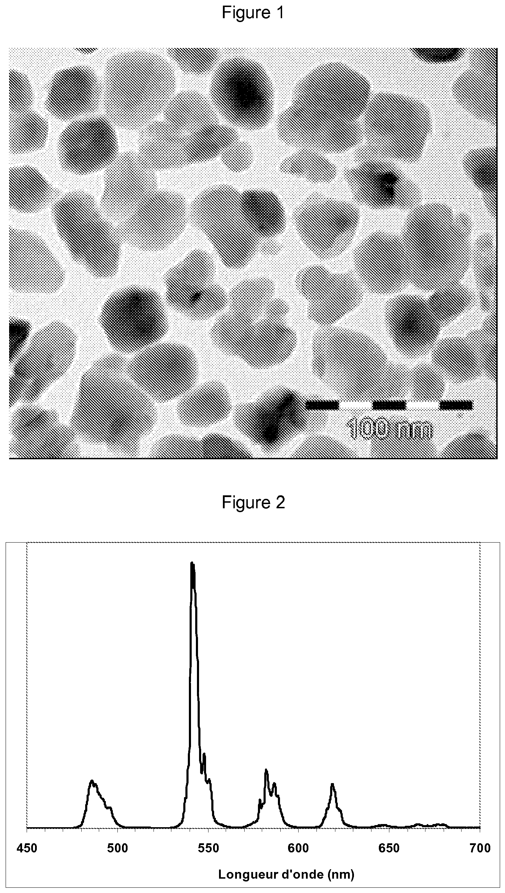

La figure 1 annexée est une photo MET de la suspension issue du broyage. Cette photo montre le caractère monocristallin et isotrope des particules. En effet, la taille moyenne mesurée des particules est de 40 nm ce qui donne un rapport taille moyenne MET/taille moyenne DRX de 1,15.

La figure 2 est un spectre d'émission de cette même suspension sous excitation à 254 nm qui montre l'émission des ions $Tb^{3+}$ correspondant à des transitions 4f-4f.

Un test colorimétrique sur la poudre issue du séchage de la suspension permet de mesurer la coordonnée L*. La valeur obtenue de L* est de 98,6%. Cette valeur, supérieure à 98%, permet de conclure à l'absence d'espèces colorées dans le produit telles que du cérium et/ou du terbium à l'état d'oxydation $4^+$.

EXEMPLE 2

Cet exemple concerne aussi la préparation d'un phosphate de lanthane, de cérium et de terbium selon l'invention, sous forme de poudre.

La synthèse est identique à l'exemple 1, puis la pulpe issue du broyage humide est séchée 12 heures dans une étuve à 110°C.

Le produit sec sous forme de poudre ainsi obtenu est remis en suspension dans l'eau pour donner une suspension.

L'analyse par granulométrie laser de cette suspension, après l'avoir soumise à des ultrasons de puissance 450 W, donne les résultats suivants :

| | |
|---|---|
| $d_{16}$ (nm) | 80 |
| $d_{50}$ (nm) | 120 |
| $d_{84}$ (nm) | 190 |
| $\sigma/m$ | 0,5 |

## Revendications

1. Suspension dans une phase liquide d'un phosphate de terre rare (Ln), Ln représentant au moins une terre rare choisie parmi le cérium, le terbium ou le lanthane en combinaison avec au moins l'une des deux premières terres rares précitées, **caractérisée en ce que** le phosphate se présente sous forme de particules primaires, de taille moyenne d'au moins 25 nm, isotropes, monocristallines, du type monazite, agglomérées en particules secondaires, de taille moyenne d'au plus 400 nm.

2. Suspension selon la revendication 1, **caractérisée en ce que** les particules secondaires présentent un indice de dispersion d'au plus 0,7.

3. Suspension selon la revendication 1 ou 2, **caractérisée en ce que** les particules comprennent un phosphate de formule générale (1) suivante :

$$La_xCe_yTb_zPO_4 \qquad (1)$$

dans laquelle la somme x+y+z est égale à 1 et au moins un de y et de z est différent de 0, x pouvant être compris plus particulièrement entre 0,4 et 0,95.

4. Suspension selon la revendication 3, caractérisée en ce en ce que les particules comprennent un phosphate de formule (1) précitée dans laquelle au moins 1 de x et de y est différent de 0 et z est d'au plus 0,5, plus particulièrement compris entre 0,05 et 0,2.

5. Suspension selon l'une des revendications précédentes, **caractérisée en ce que** les particules primaires présentent un rapport L/l d'au plus 2, L désignant la plus grande longueur de la particule et l désignant la plus petite.

6. Suspension selon l'une des revendications précédentes, **caractérisée en ce que** les particules secondaires présentent une taille moyenne d'au plus 300 nm, plus particulièrement d'au plus 200 nm.

7. Suspension selon l'une des revendications précédentes, **caractérisée en ce que** les particules primaires présentent une taille moyenne d'au moins 30 nm.

8. Suspension selon l'une des revendications précédentes, **caractérisée en ce que** les particules primaires présentent une taille moyenne comprise entre 30 nm et 150 nm.

9. Suspension selon l'une des revendications 1 et 3 à 8 **caractérisée en ce que** les particules secondaires présentent un indice de dispersion d'au plus 0,5.

10. Suspension selon l'une des revendications précédentes, **caractérisée en ce que** les particules primaires présentent un rapport taille moyenne déterminée par MET / taille moyenne déterminée par DRX d'au plus 2, plus particulièrement d'au plus 1,5.

11. Phosphate sous forme d'une poudre, **caractérisé en ce qu'**il est obtenu à partir d'une suspension selon l'une des revendications précédentes après séparation des particules de la phase liquide.

12. Procédé de préparation d'une suspension selon l'une des revendications 1 à 10, **caractérisé en ce qu'**il comprend les étapes suivantes :

   - on introduit, en continu, une première solution contenant des sels solubles des terres rares (Ln), dans une seconde solution contenant des ions phosphates et présentant un pH initial inférieur à 2;
   - on contrôle au cours de l'introduction de la première solution dans la seconde, le pH du milieu ainsi obtenu à une valeur constante et inférieure à 2 ce par quoi on obtient un précipité;
   - on récupère le précipité ainsi obtenu et on le calcine à une température d'au moins 600°C;
   - on effectue un broyage humide du produit issu de la calcination.

13. Procédé selon la revendication 12, **caractérisé en ce que** le contrôle du pH du milieu de précipitation est réalisé par addition d'un composé basique.

14. Dispositif luminescent, plus particulièrement du type système à plasma ou lampe à vapeur de mercure, **caractérisé en ce qu'**il comprend, ou **en ce qu'**il est fabriqué en utilisant un phosphate selon l'une des revendications 1 à 10 ou un phosphate obtenu par le procédé selon l'une des revendications 12 ou 13.

15. Matériau luminescent, sous forme massique ou sous forme d'une couche sur un substrat, **caractérisé en ce qu'**il comprend, ou **en ce qu'**il est fabriqué en utilisant un phosphate selon l'une des revendications 1 à 10 ou un phosphate obtenu par le procédé selon l'une des revendications 12 ou 13, le phosphate présentant une taille moyenne des particules secondaires comprise entre 100 nm et 200 nm, ce matériau étant transparent et présentant un trouble d'au plus 60% et une transmission totale d'au moins 60%.

**Patentansprüche**

1. Suspension eines Phosphats eines Seltenerdmetalls (Ln) in einer flüssigen Phase, wobei Ln für mindestens ein Seltenerdmetall steht, das aus Cer, Terbium oder Lanthan in Kombination mit mindestens einem der ersten beiden vorgenannten Seltenerd-metalle ausgewählt ist, **dadurch gekennzeichnet, dass** das Phosphat in Form von isotropen, einkristallinen Primärteilchen mit einer mittleren Größe von mindestens 25 nm vom Monazit-Typ, die zu Sekundärteilchen mit einer mittleren Größe von höchstens 400 nm agglomeriert sind, vorliegt.

2. Suspension nach Anspruch 1, **dadurch gekennzeichnet, dass** die Sekundärteilchen einen Dispersionsindex von höchstens 0,7 aufweisen.

3. Suspension nach Anspruch 1 oder 2, **dadurch gekennzeichnet, dass** die Teilchen ein Phosphat der folgenden allgemeinen Formel (1) umfassen:

$$La_xCe_yTb_zPO_4 \qquad (1)$$

wobei die Summe x+y+z gleich 1 ist und mindestens eine der Variablen y und z von 0 verschieden ist, wobei x spezieller zwischen 0,4 und 0,95 liegen kann.

4. Suspension nach Anspruch 3, **dadurch gekennzeichnet, dass** die Teilchen ein Phosphat der vorgenannten Formel (1) umfassen, wobei mindestens eine der Variablen x und y von 0 verschieden ist und z höchstens 0,5 ist und spezieller zwischen 0,05 und 0,2 liegt.

5. Suspension nach einem der vorhergehenden Ansprüche, **dadurch gekennzeichnet, dass** die Primärteilchen ein L/l-Verhältnis von höchstens 2 aufweisen, wobei L für die größte Länge des Teilchens steht und l für die kleinste Länge des Teilchens steht.

6. Suspension nach einem der vorhergehenden Ansprüche, **dadurch gekennzeichnet, dass** die Sekundärteilchen eine mittlere Größe von höchstens 300 nm und spezieller höchstens 200 nm aufweisen.

7. Suspension nach einem der vorhergehenden Ansprüche, **dadurch gekennzeichnet, dass** die Primärteilchen eine mittlere Größe von mindestens 30 nm aufweisen.

8. Suspension nach einem der vorhergehenden Ansprüche, **dadurch gekennzeichnet, dass** die Primärteilchen eine mittlere Größe zwischen 30 nm und 150 nm aufweisen.

9. Suspension nach einem der Ansprüche 1 und 3 bis 8, **dadurch gekennzeichnet, dass** die Sekundärteilchen einen Dispersionsindex von höchstens 0,5 aufweisen.

10. Suspension nach einem der vorhergehenden Ansprüche, **dadurch gekennzeichnet, dass** die Primärteilchen ein Verhältnis von durch TEM bestimmter mittlerer Größe zu durch XRD bestimmter mittlerer Größe von höchstens 2 und insbesondere höchstens 1,5 aufweisen.

11. Phosphat in Form eines Pulvers, **dadurch gekennzeichnet, dass** es aus einer Suspension nach einem der vorhergehenden Ansprüche nach Abtrennung der Teilchen von der flüssigen Phase erhalten wird.

12. Verfahren zur Herstellung einer Suspension nach einem der Ansprüche 1 bis 10, **dadurch gekennzeichnet, dass** es folgende Schritte umfasst:

    - man trägt eine erste Lösung, die lösliche Salze von Seltenerdmetallen (Ln) enthält, kontinuierlich in eine zweite Lösung, die Phosphationen enthält und einen anfänglichen pH-Wert von weniger als 2 aufweist, ein;
    - man reguliert im Lauf des Eintragens der ersten Lösung in die zweite den pH-Wert des so erhaltenen Mediums auf einen konstanten Wert von weniger als 2, wodurch man einen Niederschlag erhält;
    - man gewinnt den so erhaltenen Niederschlag und calciniert ihn bei einer Temperatur von mindestens 600°C;
    - man führt eine Nassmahlung des Produkts aus der Calcinierung durch.

13. Verfahren nach Anspruch 12, **dadurch gekennzeichnet, dass** die Regulierung des pH-Werts des Ausfällungsmediums durch Zugabe einer basischen Verbindung durchgeführt wird.

14. Lumineszenzvorrichtung, insbesondere vom Plasmasystem- oder Quecksilberdampflampen-Typ, **dadurch gekennzeichnet, dass** sie ein Phosphat nach einem der Ansprüche 1 bis 10 oder ein durch das Verfahren nach einem der Ansprüche 12 oder 13 erhaltenes Phosphat umfasst oder unter Verwendung eines Phosphats nach einem der Ansprüche 1 bis 10 oder eines durch das Verfahren nach einem der Ansprüche 12 oder 13 erhaltenen Phosphats hergestellt wird.

15. Lumineszenzmaterial in massiver Form oder in Form einer Schicht auf einem Substrat, **dadurch gekennzeichnet, dass** es ein Phosphat nach einem der Ansprüche 1 bis 10 oder ein durch das Verfahren nach einem der Ansprüche 12 oder 13 erhaltenes Phosphat umfasst oder unter Verwendung eines Phosphats nach einem der Ansprüche 1 bis 10 oder eines durch das Verfahren nach einem der Ansprüche 12 oder 13 erhaltenen Phosphats hergestellt wird, wobei das Phosphat eine mittlere Sekundärteilchengröße zwischen 100 nm und 200 nm aufweist, wobei dieses Material transparent ist und eine Trübung von höchstens 60% und eine Gesamttransmission von mindestens 60% aufweist.

**Claims**

1. Suspension in a liquid phase of a phosphate of a rare-earth metal (Ln), Ln representing at least one rare-earth metal chosen from cerium, terbium and lanthanum in combination with at least one of the first two abovementioned rare-earth metals, **characterized in that** the phosphate is in the form of isotropic, monocrystalline primary particles with a mean size of at least 25 nm, of the monazite type, aggregated into secondary particles, with a mean size of not more than 400 nm.

2. Suspension according to Claim 1, **characterized in that** the secondary particles have a dispersion index of not more than 0.7.

3. Suspension according to Claim 1 or 2, **characterized in that** the particles comprise a phosphate of general formula (1) below:

$$La_xCe_yTb_zPO_4 \qquad (1)$$

in which the sum x+y+z is equal to 1 and at least one from among y and z is other than 0, x possibly being more particularly between 0.4 and 0.95.

4. Suspension according to Claim 3, **characterized in that** the particles comprise a phosphate of the abovementioned formula (1) in which at least one from among x and y is other than 0 and z is not more than 0.5, more particularly between 0.05 and 0.2.

5. Suspension according to one of the preceding claims, **characterized in that** the primary particles have an L/L ratio of not more than 2, L denoting the longest length of the particle and l denoting the smallest.

6. Suspension according to one of the preceding claims, **characterized in that** the secondary particles have a mean size of not more than 300 nm and more particularly of not more than 200 nm.

7. Suspension according to one of the preceding claims, **characterized in that** the primary particles have a mean size of at least 30 nm.

8. Suspension according to one of the preceding claims, **characterized in that** the primary particles have a mean size of between 30 nm and 150 nm.

9. Suspension according to one of Claims 1 and 3 to 8, **characterized in that** the secondary particles have a dispersity index of not more than 0.5.

10. Suspension according to one of the preceding claims, **characterized in that** the primary particles have a mean size determined by TEM/mean size determined by XRD ratio of not more than 2, more particularly not more than 1.5.

11. Phosphate in the form of a powder, **characterized in that** it is obtained from a suspension according to one of the preceding claims after separation of the particles of the liquid phase.

12. Process for preparing a suspension according to one of Claims 1 to 10, **characterized in that** it comprises the following steps:

   - a first solution containing soluble salts of the rare-earth metals (Ln) is introduced continuously into a second solution containing phosphate ions and having an initial pH of less than 2;
   - the pH of the medium thus obtained is regulated during the introduction of the first solution into the second at a constant value of less than 2, via which a precipitate is obtained;
   - the precipitate thus obtained is recovered and calcined at a temperature of at least 600°C;
   - wet milling of the product obtained from calcination is performed.

**13.** Process according to Claim 12, **characterized in that** the regulation of the pH of the precipitation medium is performed by adding a basic compound.

**14.** Luminescent device, more particularly of the plasma system or mercury vapor lamp type, **characterized in that** it comprises, or **in that** it is manufactured using, a phosphate according to one of Claims 1 to 10 or a phosphate obtained via the process according to either of Claims 12 and 13.

**15.** Luminescent material, in bulk form or in the form of a layer on a substrate **characterized in that** it comprises, or **in that** it is manufactured using, a phosphate according to one of Claims 1 to 10 or a phosphate obtained via the process according to either of Claims 12 and 13, the phosphate having a mean secondary particle size of between 100 nm and 200 nm, this material being transparent and having a haze of not more than 60% and a total transmission of at least 60%.

Figure 1

Figure 2

Longueur d'onde (nm)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LING LI et al.** Improved luminescence of Lanthanide(III)-Doped Nanophosphors by Linear Aggregation. *JOURNAL OF PHYSICAL CHEMISTRY C,* 2007, vol. 111, 4111-4115